# EUROPÄISCHE PATENTSCHRIFT

(11) **EP 3 631 398 B1**
(45) Veröffentlichungstag und Bekanntmachung des Hinweises auf die Patenterteilung: **14.04.2021**
(21) Anmeldenummer: 18722953.9
(22) Anmeldetag: 03.05.2018
(51) Int. Cl.: G01L 27/00, G01L 23/22, F02D 35/02

(54) **VERFAHREN ZUR ÜBERWACHUNG EINES ZYLINDERDRUCKSENSORS**
METHOD FOR MONITORING A CYLINDER PRESSURE SENSOR
PROCÉDÉ DE SURVEILLANCE D'UN CAPTEUR DE PRESSION DE CYLINDRE

(30) Priorität: 22.05.2017 DE 102017004895
(43) Veröffentlichungstag der Anmeldung: 08.04.2020
(73) Patentinhaber: MTU Friedrichshafen GmbH, 88045 Friedrichshafen (DE)
(72) Erfinder: FRANK, Tobias, 88048 Friedrichshafen (DE); TOTH, Aron, 88048 Friedrichshafen (DE); WEIDELE, Horst, 88709 Meersburg (DE)
(74) Vertreter: Kordel, Mattias
(86) Internationale Anmeldenummer: PCT/EP2018/061247
(87) Internationale Veröffentlichungsnummer: WO 2018/215181

(56) Entgegenhaltungen:
- WO-A1-2015/050237
- DE-A1- 4 127 950
- US-A- 3 183 708
- US-A1- 2007 277 591

## Beschreibung

Die Erfindung betrifft ein Verfahren zur Überwachung eines Zylinderdrucksensors, bei dem in einem vorgebbaren Kurbelwellen-Winkelbereich der Sensorwert auf Zulässigkeit sowie Unzulässigkeit geprüft wird, mit festgestellter Zulässigkeit der Zylinderdrucksensor weiter verwendet wird und mit festgestellter Unzulässigkeit der Zylinderdrucksensor deaktiviert wird.

Bei einem zylinderdruckbasierten Motormanagementsystem wird die Güte der Verbrennung anhand des gemessenen Zylinderdrucks beurteilt. Etabliert ist eine Verbrennungsregelung auf den 50%-Umsatzpunkt (MFB50). Grundlage für diese Regelung, zum Beispiel einer Spritzbeginn-Regelung, ist daher ein funktionstüchtiger Zylinderdrucksensor. Die raue Umgebung und auch die eingestellte Betriebsweise können jedoch eine Schädigung des Zylinderdrucksensors bewirken. So werden beispielsweise Gasmotoren an der Klopfgrenze betrieben, um einen optimalen Wirkungsgrad zu erreichen. Je nach Stärke des Klopfens kann hierbei das Messelement des Zylinderdrucksensors, also die Membrane, irreversibel verformt oder sogar zerstört werden. Je nach Verformung wird daher ein in Wirklichkeit nicht existenter Druckwert angezeigt. Solange der Druck im Zylinder nicht höher ist als jene dem Maximum des Messbereichs entsprechende Ausgangsspannung des Drucksensors von zum Beispiel 4.5 Volt es zulässt, kann der Druck im Zylinder noch korrekt bestimmt werden. Kritisch sind allerdings höhere Druckwerte im Zylinder, da dann der Zylinderdrucksensor in der Sättigung betrieben wird, das heißt, die Ausgangsspannung ist dann auf 4.5 Volt begrenzt und zeigt ein Plateau.

Aus der US 2007/0277591 A1 ist ein Verfahren zur Überwachung eines Zylinderdrucksensors bekannt, bei dem innerhalb eines vorgegebenen Kurbelwellen-Winkelbereichs das Sensorsignal auf einen Nullpunktsfehler und einen Verstärkungsfehler überwacht wird. Liegen die Sensorwerte nicht innerhalb des zulässigen Wertebereichs, so werden die Sensorwerte gegebenenfalls angepasst. Die nachfolgenden Regelungen, zum Beispiel der Spritzbeginn, basieren dann auf den angepassten Sensorwerten. Bei einem zu großen Nullpunktsfehler werden die Sensorwerte angepasst und der Fahrer mittels Warnlampe über den Fehler informiert. Bei einem zu großen Verstärkungsfehler wird der Zylinderdrucksensor deaktiviert und ein Ersatzwert des Zylinderdrucks für die nachfolgenden Regelungen festgelegt. Kritisch ist hierbei, dass bereits bei einem temporären Verstärkungsfehler der Zylinderdrucksensor deaktiviert wird.

Der Erfindung liegt daher die Aufgabe zugrunde, ein Verfahren zur Überwachung des Zylinderdrucksensors mit gegenüber dem beschriebenen Stand der Technik verbesserter Fehlererkennung zu entwickeln.

Gelöst wird diese Aufgabe durch die Merkmale von Anspruch 1. Die Ausgestaltungen sind in den Unteransprüchen dargestellt.

Die Erfindung sieht vor, dass ein erster Sensorwert als Startwert sowie ein zweiter Sensorwert als Stoppwert gesetzt werden, aus der Anzahl an Abtastschritten zwischen dem Startwert sowie dem Stoppwert eine Plateaubreite bestimmt wird und die Plateaubreite als maßgeblich für die Zulässigkeit oder Unzulässigkeit der Sensorwerte gesetzt wird. Hierzu wird in einem ersten Schritt der Sensorwert mit einem Sättigungsgrenzwert verglichen, wobei Sensorwerte größer als der Sättigungsgrenzwert einem ersten Bereich und Sensorwerte kleiner als der Sättigungsgrenzwert einem zweiten Bereich zugeordnet werden. Im ersten Bereich wird der erste Sensorwert, der größer als der Sättigungsgrenzwert ist, als Startwert und der letzte Sensorwert, der größer als der Sättigungsgrenzwert ist, als Stoppwert gesetzt. Im zweiten Bereich wird das Maximum der zweiten Ableitung des Sensorsignals als Startwert und das Minimum der zweiten Ableitung des Sensorsignals als Stoppwert gesetzt. In beiden Fällen wird im Anschluss daran die Plateaubreite bestimmt, indem die Anzahl der Abtastschritte mit der Signalauflösung multipliziert wird. Unter Signalauflösung ist der Winkelabstand in Grad zweier Messewerte bezogen auf den Kurbelwellen-Winkel oder der zeitliche Abstand zweier Messwerte, also die Abtastzeit, zu verstehen. Der Vergleich der Plateaubreite mit einem vorab definierten Grenzwert legt die weitere Vorgehensweise fest, indem bei einer zu großen Plateaubreite der Zylinderdrucksensor als defekt markiert wird.

Neben der treffsicheren Erkennung eines vorgeschädigten Zylinderdrucksensors und einem aktivem Schutz der Brennkraftmaschine besteht ein weiterer Vorteil darin, dass das Sensorsignal solange als möglich verwendet wird. Liegen die Sensorwerte unterhalb des Sättigungsgrenzwerts, so werden diese trotz eines Verstärkungsfehlers verwendet. Zudem gestattet es die Erfindung die verbauten Zylinderdrucksensoren gegeneinander zu plausibilisieren. In der Praxis ist das dargestellte Verfahren sowohl bei einem Dieselmotor, bei einem Gasmotor oder auch bei einem Ottomotor anwendbar.

In den Figuren ist ein bevorzugtes Ausführungsbeispiel dargestellt. Es zeigen:
- Figur 1: ein Systemschaubild,
- Figur 2: einen Programm-Ablaufplan,
- Figur 3: ein Diagramm und
- Figur 4: ein Diagramm

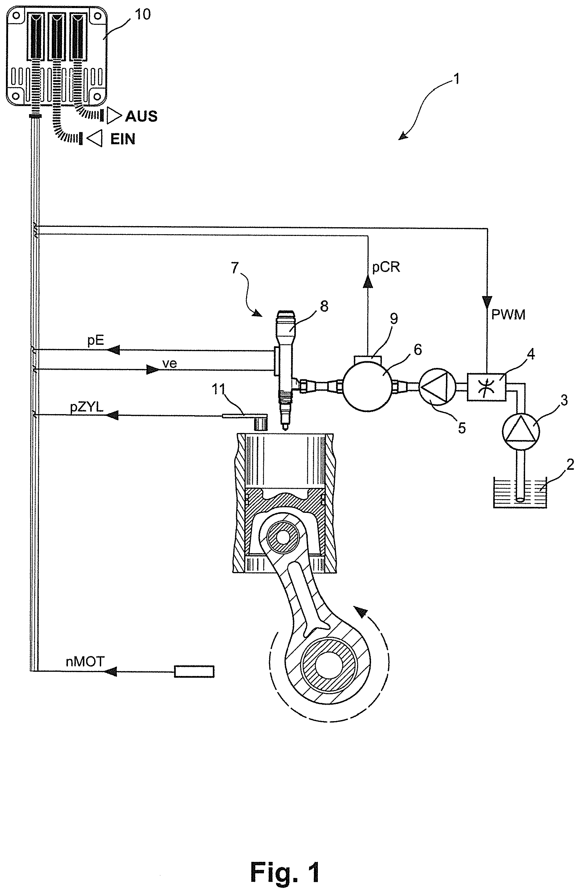

Die Figur 1 zeigt ein Systemschaubild einer elektronisch gesteuerten Brennkraftmaschine 1 mit einem Common-Railsystem. Das Common-Railsystem umfasst folgende mechanische Komponenten: eine Niederdruckpumpe 3 zur Förderung von Kraftstoff aus einem Kraftstofftank 2, eine veränderbare Saugdrossel 4 zur Beeinflussung des durchströmenden Kraftstoff-Volumenstroms, eine Hochdruckpumpe 5 zur Förderung des Kraftstoffs unter Druckerhöhung, ein Rail 6 zum Speichern des Kraftstoffs und Injektoren 7 zum Einspritzen des Kraftstoffs in die Brennräume der Brennkraftmaschine 1. Optional kann das Common-Railsystem auch mit Einzelspeichern ausgeführt sein, wobei dann zum Beispiel im Injektor 7 ein Einzelspeicher 8 als zusätzliches Puffervolumen integriert ist.

Die Betriebsweise der Brennkraftmaschine 1 wird durch ein elektronisches Steuergerät 10 bestimmt. Das elektronische Steuergerät 10 beinhaltet die üblichen Bestandteile eines Mikrocomputersystems, beispielsweise einen Mikroprozessor, I/O-Bausteine, Puffer und Speicherbausteine (EEPROM, RAM). In den Speicherbausteinen sind die für den Betrieb der Brennkraftmaschine 1 relevanten Betriebsdaten in Kennfeldern/Kennlinien oder als Motormodelle appliziert. Über diese berechnet das elektronische Steuergerät 10 aus den Eingangsgrößen die Ausgangsgrößen. In der Figur 1 sind exemplarisch folgende Eingangsgrößen dargestellt: der Raildruck pCR, der mittels eines Rail-Drucksensors 9 gemessen wird, eine Motordrehzahl nMOT, der Zylinderdruck pZYL, der mittels eines Zylinderdrucksensors 11 gemessen wird, optional der Druck pE des Einzelspeichers 8 und eine Eingangsgröße EIN. Unter der Eingangsgröße EIN sind die weiteren Sensorsignale zusammengefasst, beispielsweise der Ladeluftdruck eines Abgasturboladers. In Figur 1 sind als Ausgangsgrößen des elektronischen Steuergeräts 10 ein Signal PWM zur Ansteuerung der Saugdrossel 4, ein Signal ve zur Ansteuerung der Injektoren 7 (Spritzbeginn/ Spritzende) und eine Ausgangsgröße AUS dargestellt. Die Ausgangsgröße AUS steht stellvertretend für die weiteren Stellsignale zur Steuerung und Regelung der Brennkraftmaschine 1, beispielsweise für ein Stellsignal zur Aktivierung eines zweiten Abgasturboladers bei einer Registeraufladung. Anhand des Zylinderdrucks pZYL bestimmt das elektronische Steuergerät 10 die Verbrennungslage. Bewertet wird die Verbrennungslage über den Wert MFB50, bei dem die Hälfte der eingespritzten Kraftstoffmenge verbrannt ist.

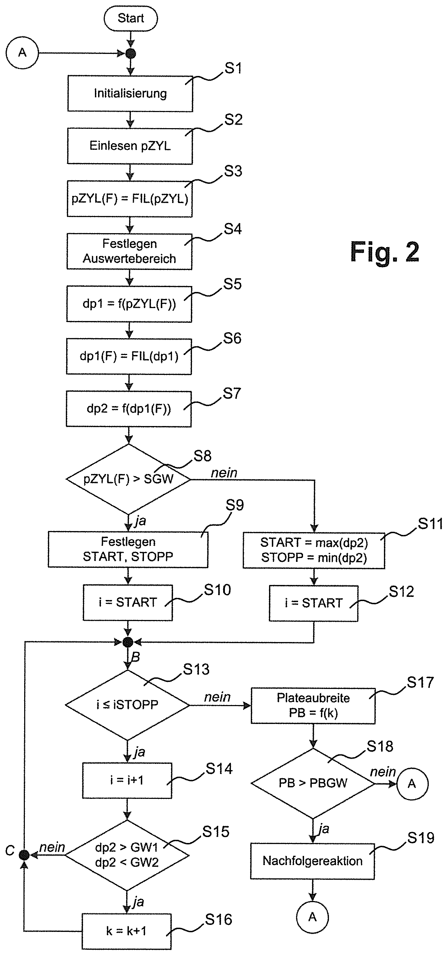

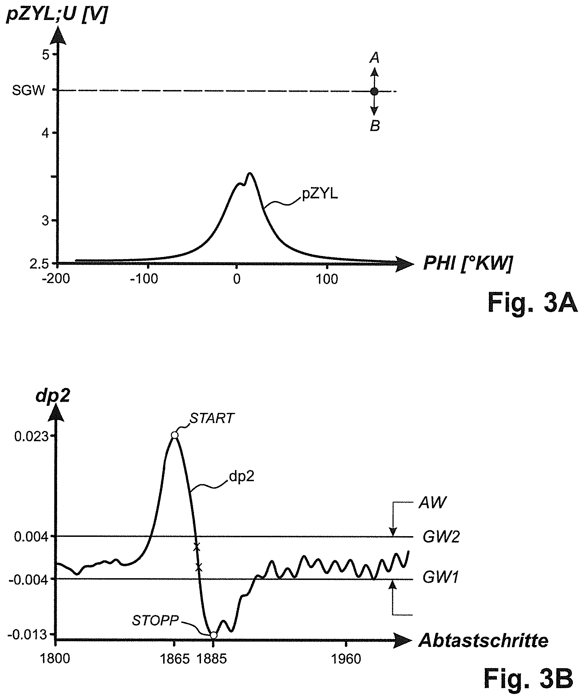

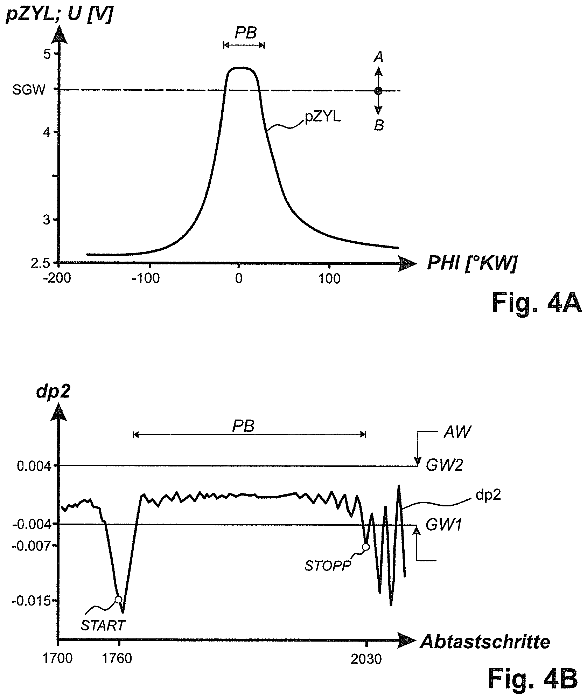

Die Figur 2 zeigt einen Programm-Ablaufplan, in welchem das Verfahren dargestellt ist. Die angegebenen Zahlenwerte beziehen sich auf einen Spannungssensor mit einem Wertebereich von 0 bis 5 V und einem Messbereich von 0.5 bis 4.5 V. Selbstverständlich lässt sich das erfindungsgemäße Verfahren auch auf Spannungsdrucksensoren und Stromdrucksensoren übertragen. Nach dem Start des Programms werden bei S1 die Verfahrenswerte initialisiert. So werden ein Sättigungsgrenzwert auf zum Beispiel SGW=4.5 Volt gesetzt, ein Auswertebereich festgelegt und die entsprechenden Zähler auf null zurückgesetzt. Bei S2 wird dann der Zylinderdruck pZYL, also der Spannungswert des Zylinderdrucksensors (Fig.1: 1), eingelesen. Im fehlerfreien Zustand liefert der Zylinderdrucksensor einen Spannungsbereich von 0.5 bis 4.5 Volt. Bei S3 wird der Zylinderdruck pZYL mittels gleitender Mittelwertbildung gefiltert. In der Figur 2 ist die Ausgangsgröße mit pZYL(F) gekennzeichnet. Anschließend wird bei S4 ein Auswertebereich des Kurbelwellen-Winkels festgelegt, zum Beispiel PHI=±180°. Innerhalb dieses Kurbelwellen-Winkelbereichs erfolgt die Prüfung des Zylinderdrucksensors. Bei S5 wird dann die erste Ableitung dp1 des gefilterten Zylinderdrucks pZYL(F) berechnet. Die erste Ableitung dp1 kann auf den Kurbelwellen-Winkel (pZYL(F)/dPHI) oder auf die Zeit (pZYL(F)/dt) bezogen sein. Bei S6 wird dann die erste Ableitung dp1 mittels gleitender Mittelwertbildung gefiltert, Ausgangsgröße: dp1(F). Bei S7 wiederum wird aus der Ausgangsgröße dp1(F) die zweite Ableitung dp2 berechnet. Danach wird bei S8 geprüft, ob der gefilterte Zylinderdruck pZYL(F) größer als der Sättigungsgrenzwert SGW ist. Bei positiven Abfrageergebnis, S8: ja, wird dieser einem ersten Bereich zugeordnet und gemäß den Schritten S9 und S10 verfahren. Bei negativen Abfrageergebnis, S8: nein, wird der gefilterte Zylinderdruck pZYL(F) einem zweitem Bereich zugeordnet und gemäß den Schritten S11 und S12 verfahren. Eine nähere Beschreibung hierzu erfolgt in Verbindung mit den Figuren 3 und 4.

Wurde bei S8 erkannt, dass der Sensorwert, hier: der gefilterte Zylinderdruck pZYL(F), kleiner als der Sättigungsgrenzwert SGW ist, so werden bei S11 der Startwert START und der Stoppwert STOPP gesetzt. Der Startwert START ist der maximale Wert der zweiten Ableitung dp2 und der Stoppwert STOPP ist der minimale Wert der zweiten Ableitung dp2. In Figur 3B ist beispielsweise der Startwert START durch dp2=0.023 w.E. und den Abtastschritt 1865 definiert. Entsprechend ist der Stoppwert STOPP durch dp2=-0.013 w.E. und den Abtastschritt 1885 definiert. Die Abkürzung w.E. steht für "willkürliche Einheit", in diesem Fall für die zweite Ableitung der Spannungseinheit (Volt) über dem Kurbelwinkel PHI (Grad). Als Äquivalent kann anstelle des Kurbelwellenwinkels auch die Zeit verwendet werden. Bei S12 wird dann eine Laufvariable i auf den Abtastschritt des Startwerts gesetzt, also i=1865. Danach wird der Programm-Ablaufplan am Punkt B fortgesetzt.

Wurde bei S8 erkannt, dass der gefilterte Zylinderdruck pZYL(F) größer als der Sättigungsgrenzwert SGW ist, so werden bei S9 der Startwert START und der Stoppwert STOPP gesetzt. Der Startwert START entspricht dem ersten Sensorwert, der größer als die Sättigungsgrenze SGW ist. Der Stoppwert STOPP entspricht dem letzten Sensorwert, der größer als die Sättigungsgrenze SGW ist. Der Startwert START ist durch einen Spannungswert und den hierzu gehörigen Abtastschritt definiert. Beispielsweise ist in der Fig. 4B nach Berechnung der zweiten Ableitung der Startwert START durch dp2=-0.015 w.E. und den Abtastschritt 1760 und der Stoppwert STOPP durch dp2=-0.007 w.E. und den Abtastschritt 2030 definiert. Bei S10 wird dann die Laufvariable i auf den Abtastschritt des Startwerts gesetzt, also i=1760. Danach wird der Programm-Ablaufplan am Punkt B fortgesetzt.

Bei S13 wird geprüft ob die Laufvariable i kleiner/gleich als der zum Stoppwert STOPP korrespondierende Abtastschritt iSTOPP ist. Ist dies der Fall, Abfrageergebnis S13: ja, so wird bei S14 die Laufvariable i um eins erhöht und bei S15 geprüft, ob die zweite Ableitung dp2 innerhalb eines Auswertebereichs liegt. In den Figuren 3B und 4B ist der Auswertebereich mit dem Bezugszeichen AW gekennzeichnet. Definiert wird der Auswertebereich durch die beiden Grenzwerte GW1 und GW2. Die beiden Grenzwerte GW1 und GW2 sind so gewählt, dass diese oberhalb bzw. unterhalb des Signalrauschbands liegen, jedoch die Signale für Start und Stopp außerhalb dieser Grenzwerte liegen. Liegt die zweite Ableitung dp2 innerhalb des Auswertebereichs AW, Abfrageergebnis S15: ja, so wird bei S16 eine Laufvariable k um eins erhöht. Die Laufvariable k steht für die Anzahl an Abtastschritten im Auswertebereich. Danach wird der Programm-Ablaufplan beim Punkt C und dann beim Punkt B fortgesetzt. Wird bei S15 festgestellt, dass die zweite Ableitung dp2 außerhalb des Auswertebereichs AW liegt, so wird der Programm-Ablaufplan beim Punkt C und dann beim Punkt B fortgesetzt.

Ergibt die Prüfung bei S13, dass die Laufvariable i größer als iSTOPP ist, so wird bei S17 die Plateaubreite PB bestimmt. Hierzu wird der Wert die Laufvariable k mit der Signalauflösung, zum Beispiel 0.1 Grad Kurbelwellenwinkel, multipliziert. Danach wird bei S18 geprüft, ob die Plateaubreite PB größer als ein Grenzwert PBGW ist. Der Grenzwert PBGW ist ein Maß, ab dem bei dessen Überschreitung der Zylinderdrucksensor als defekt markiert wird. Ist die Plateaubreite PB kleiner als der Grenzwert PBGW, Abfrageergebnis S18: nein, so wird der Zylinderdrucksensor als funktionsfähig markiert und der Programm-Ablaufplan am Punkt A mit dem Schritt S1 fortgesetzt. Wird bei S18 erkannt, dass die Plateaubreite PB größer ist als Grenzwert PBGW, Abfrageergebnis S18: ja, so wird der Zylinderdrucksensor als defekt markiert und bei S19 eine Nachfolgereaktion initiiert. Als Nachfolgereaktion ist zum Beispiel vorgesehen, dass für die Brennkraftmaschine eine Leistungsreduktion veranlasst wird, der Zylinderdruck eines fehlerfrei arbeitenden Drucksensors als Grundlage für die Steuerung und Regelung verwendet wird oder im einfachsten Fall der Sensorwert des defekten Zylinderdrucksensors auf einen Ersatzwert gesetzt wird. Danach wird der Programm-Ablaufplan beim Punkt A fortgesetzt.

Der Programm-Ablaufplan der Figur 2 umfasst mit den Schritten S2 bis S7 eine Konditionierung des Messsignals als maximalen Umfang der Erfindung. In einer einfacheren Ausführung der Erfindung können diese Schritte entfallen, sodass zum Beispiel beim Schritt S8 anstelle des gefilterten Zylinderdrucks pZYL(F) der sensierte Zylinderdruck pZYL als Sensorwert verwendet wird. Ebenso wird dann bei der Auswertung der Plateaubreite nicht auf die zweite Ableitung abgestellt sondern auf die Sensorwerte. Diese einfachere Ausführungsform gestattet einen schnelleren Verfahrenszyklus. Die Verwendung der zweiten Ableitung und die Signalkonditionierung bieten dem gegenüber allerdings den Vorteil, dass die Grenzwerterfassung, ab dem ein Zylinderdrucksensor als defekt erkannt wird, sowie die Bestimmung von START und STOPP zur Eingrenzung der Defektprüfung mathematisch sicherer zu bestimmen ist.

In der Figur 3 ist ein Beispiel für einen Zylinderdruckverlauf im zweiten Bereich dargestellt. Die Figur 3 besteht aus den Figuren 3A und 3B. Hierbei zeigt die Figur 3A den Verlauf des Zylinderdrucks pZYL bzw. den hierzu korrespondierenden Spannungsverlauf U in Volt des Zylinderdrucksensors über dem Kurbelwellenwinkel PHI in Grad Kurbelwelle. Die Figur 3B zeigt den Verlauf der zweiten Ableitung dp2 des Sensorsignals über den Abtastschritten.

Gemäß der Darstellung in der Figur 3A liegt im betrachteten Kurbelwellen-Winkelbereich der maximale Wert des Zylinderdrucks pZYL bzw. der korrespondierende Spannungswert U unterhalb der Sättigungsgrenze von zum Beispiel SGW=4.7 V. Damit liegt der Signalverlauf in einem zweiten Bereich B. Zu jedem Spannungswert gehört ein Abtastschritt. In der Figur 3B ist auf der Abszisse ein Bereich vom 1800sten Abtastschritt bis 1960sten Abtastschritt aufgetragen. Das Verfahren sieht nun vor, dass der maximale Wert der zweiten Ableitung dp2 als Startwert START gesetzt wird. In der Figur 3B ist dieser Wert entsprechend als START gekennzeichnet. Der minimale Wert der zweiten Ableitung dp2 ist als STOPP gekennzeichnet. Beispielsweise ist der Startwert START durch dp2=0.023 w.E. und den Abtastschritt 1865 gekennzeichnet. Die Abkürzung w.E. steht für "willkürliche Einheit", in diesem Fall für die zweite Ableitung der Spannungseinheit (Volt) auf Kurbelwinkel Phi (Grad) bezogen. Als Äquivalent kann anstelle des Kurbelwellenwinkels auch die Zeit verwendet werden. Der Stoppwert STOPP ist durch dp2=-0.013 w.E. und den Abtastschritt 1885 definiert. Ergänzend ist in der Figur 3B der Auswertebereich AW eingezeichnet, welcher durch den ersten Grenzwert GW1=-0.004 w.E. und den zweiten Grenzwert GW2=0.004 w.E. definiert wird. Gezählt werden nun die Abtastschritte, die innerhalb des Auswertebereichs AW liegen. In der Figur 3B sind exemplarisch 2 Abtastschritte eingezeichnet. Anschließend wird anhand der Anzahl der Abtastschritte und der Signalauflösung, zum Beispiel 0.1 Grad Kurbelwellenwinkel, die Plateaubreite PB berechnet und geprüft ob diese größer als ein Grenzwert (Fig. 2: PBGW) ist. Für das dargestellte Beispiel ist die Plateaubreite kleiner als der Grenzwert, sodass der Zylinderdrucksensor als fehlerfrei markiert wird.

In der Figur 4 ist ein Beispiel für einen Zylinderdruckverlauf im ersten Bereich A dargestellt. Die Figur 4 besteht aus den Figuren 4A und 4B. Hierbei zeigt die Figur 4A den Verlauf des Zylinderdrucks pZYL bzw. den hierzu korrespondierenden Spannungsverlauf U in Volt des Zylinderdrucksensors über dem Kurbelwellenwinkel PHI in Grad Kurbelwelle. Die Figur 4B zeigt den Verlauf der zweiten Ableitung dp2 des Sensorsignals über den Abtastschritten.

Wie in der Figur 4A dargestellt liegt der Spannungspegel U des Zylinderdrucksensors oberhalb des Sättigungsgrenzwerts SGW, das heißt, der Zylinderdrucksensor wird in der Sättigung betrieben. Der Spannungsverlauf U zeigt daher ein Plateau PB. Eine mögliche Ursache hierfür kann eine irreversible Verformung der Membrane des Zylinderdrucksensors und ein entsprechend hoher Zylinderdruck sein, wie dieser zum Beispiel bei Volllast auftritt. Weitere mögliche Ursachen können sein, dass sowohl der Zylinder mit zu hohen Drücken betrieben wird und der Sensor den Messbereich nicht komplett erfassen kann, als auch eine klopfenden Verbrennung. Wie im Programm-Ablauf der Figur 2 bereits erläutert, wird als Startwert START der erste tatsächliche Sensorwert gesetzt, welcher einen größeren Betrag als die Sättigungsgrenze SGW hat. Als Stoppwert STOPP wird der letzte tatsächliche Sensorwert gesetzt, welcher einen größeren Betrag als die Sättigungsgrenze SGW hat. In der Figur 4B sind der Startwert START und Stoppwert STOPP entsprechend gekennzeichnet. Der Startwert START ist durch dp2=-0.015 w.E. und den Abtastschritt 1760 definiert. Der Stoppwert STOPP ist durch dp2=-0.007 w.E. und den Abtastschritt 2030 definiert.

Die Erfindung sieht nun vor, dass die Anzahl der Abtastschritte ermittelt wird, bei denen die zweite Ableitung dp2 innerhalb des Auswertebereichs AW liegt. Definiert wird der Auswertebereich durch die beiden Grenzwerte GW1 und GW2. In der Figur 4B ist dies also der Bereich vom 1760sten Abtastschritt bis zum 2030sten Abtastschritt. Im Anschluss daran wird die Plateaubreite PB bestimmt, indem die Anzahl der Abtastschritte mit der Signalauflösung, zum Beispiel 0.1 Grad Kurbelwellenwinkel, multipliziert wird. Danach wird geprüft, ob die Plateaubreite PB größer als der Grenzwert PBGW ist. Bei dem in der Figur 4B dargestellten Beispiel wurde eine zu große Plateaubreite detektiert, sodass eine entsprechende Nachfolgereaktion initiiert wird, zum Beispiel eine Leistungsreduktion der Brennkraftmaschine.

### Bezugszeichen

- 1: Brennkraftmaschine
- 2: Kraftstofftank
- 3: Niederdruckpumpe
- 4: Saugdrossel
- 5: Hochdruckpumpe
- 6: Rail
- 7: Injektor
- 8: Einzelspeicher
- 9: Rail-Drucksensor
- 10: Elektronisches Steuergerät
- 11: Zylinderdrucksensor

## Patentansprüche

1. Verfahren zur Überwachung eines Zylinderdrucksensors (11), bei dem Sensorwerte des Zylinderdrucksensors (11) erfasst werden und bei dem in einem vorgebbaren Kurbelwellen-Winkelbereich (PHI) der Sensorwert auf Zulässigkeit sowie Unzulässigkeit geprüft wird, mit festgestellter Zulässigkeit der Zylinderdrucksensor (11) weiter verwendet wird und mit festgestellter Unzulässigkeit der Zylinderdrucksensor (11) deaktiviert wird,
**dadurch gekennzeichnet,**
**dass** ein erster Sensorwert des Zylinderdrucksensors (11) als Startwert (START) sowie ein zweiter Sensorwert als Stoppwert (STOPP) gesetzt werden, indem der Sensorwert mit einem Sättigungsgrenzwert (SGW) verglichen wird, Sensorwerte größer als der Sättigungsgrenzwert (SGW) einem ersten Bereich (A) und Sensorwerte kleiner als der Sättigungsgrenzwert (SGW) einem zweiten Bereich (B) zugeordnet werden, wobei im ersten Bereich (A) der erste Sensorwert größer als der Sättigungsgrenzwert (SGW) als Startwert (START) gesetzt wird und der letzte Sensorwert größer als der Sättigungsgrenzwert (SGW) als Stoppwert (STOPP) gesetzt wird, wobei im zweiten Bereich (B) das Maximum der zweiten Ableitung (dp2) des Sensorsignals als Startwert (START) gesetzt wird und das Minimum der zweiten Ableitung (dp2) des Sensorsignals als Stoppwert (STOPP) gesetzt wird, aus der Anzahl (k) an Abtastschritten zwischen dem Startwert (START) sowie dem Stoppwert (STOPP) eine Plateaubreite (PB) bestimmt wird und die Plateaubreite (PB) als maßgeblich für die Zulässigkeit oder Unzulässigkeit der Sensorwerte gesetzt wird, wobei bei einer Plateaubreite (PB) größer als ein Grenzwert (PBGW) die Unzulässigkeit der Sensorwerte festgestellt wird und der Zylinderdrucksensor (11) als defekt markiert wird.

2. Verfahren nach Anspruch 1, **dadurch gekennzeichnet, dass** die Plateaubreite (PB) berechnet wird, indem die Anzahl (k) der Abtastschritte mit der Signalauflösung im Sinne eines Kurbelwellen-Winkels oder einer Abtastzeit multipliziert wird.

3. Verfahren nach Anspruch 2, **dadurch gekennzeichnet, dass** ausschließlich Sensorwerte innerhalb eines Auswertebereichs (AW) bei der Bestimmung der Plateaubreite (PB) berücksichtigt werden.

4. Verfahren nach Anspruch 3, **dadurch gekennzeichnet, dass** eine Nachfolgeregelung initiiert wird, während der der Sensorwert auf einen Ersatzwert gesetzt wird, ein leistungsreduzierter Betrieb der Brennkraftmaschine (1) vorgegeben wird, der Sensorwert auf den Sensorwert eines gesunden Zylinderdrucksensors (11) gesetzt wird oder ein Motorstopp ausgegeben wird.

## Claims

1. A method for monitoring a cylinder pressure sensor (11), in the case of which sensor values of the cylinder pressure sensor (11) are collected and in the case of which the sensor value is checked for admissibility as well as inadmissibility in a predeterminable crankshaft angle range (PHI), the cylinder pressure sensor (11) is used further when admissibility is determined, and the cylinder pressure sensor (11) is deactivated when inadmissibility is determined,
**characterised in**
**that** a first sensor value of the cylinder pressure sensor (11) is set as start value (START) and a second sensor value is set as stop value (STOP), in that the sensor value is compared to a saturation limit value (SGW), sensor values greater than the saturation limit value (SGW) are assigned to a first range (A), and sensor values less than the saturation limit value (SGW) are assigned to a second range (B), wherein within the first range (A) the first sensor value greater than the saturation limit value (SGW) is set as start value (START), and the last sensor value greater than the saturation limit value (SGW) is set as stop value (STOP), wherein in the second range (B) the maximum of the second derivative (dp2) of the sensor signal is set as start value (START), and the minimum of the second derivative (dp2) of the sensor signal is set as stop value (STOP), a plateau width (PB) is determined from the number (k) of sampling steps between the start value (START) as well as the stop value (STOP), and the plateau width (PB) is set as being relevant for the admissibility or inadmissibility of the sensor values, wherein the inadmissibility of the sensor values is determined and the cylinder pressure sensor (11) is marked as defective in the case of a plateau width (PB) greater than a limit value (PBGW).

2. The method according to claim 1, **characterised in that** the plateau width (PB) is calculated **in that** the number (k) of the sampling steps is multiplied by the signal resolution in terms of a crankshaft angle or a sampling time.

3. The method according to claim 2, **characterised in that** only sensor values within an evaluation range (AW) are considered when determining the plateau width (PB).

4. The method according to claim 3, **characterised in that** a follow-up control is initiated during which the sensor value is set to a replacement value, a reduced-power operation of the internal combustion engine (1) is predetermined, the sensor value is set to the sensor value of a well functioning cylinder pressure sensor (11), or an engine stop is output.

## Revendications

1. Procédé de contrôle d'un capteur de pression de cylindre (11), dans lequel les valeurs du capteur du capteur de pression de cylindre (11) sont enregistrées et dans lequel la recevabilité et l'irrecevabilité de la valeur du capteur sont contrôlées dans une zone angulaire du vilebrequin (PHI) pouvant être prédéterminée, le capteur de pression de cylindre (11) pouvant encore être utilisé dans le cas d'une recevabilité constatée et le capteur de pression de cylindre (11) étant désactivé dans le cas d'une irrecevabilité constatée,
**caractérisé en ce que**
une première valeur du capteur du capteur de pression de cylindre (11) est définie comme valeur de démarrage (MARCHE) et une deuxième valeur du capteur est définie comme valeur d'arrêt (ARRÊT) par une comparaison entre la valeur du capteur et une valeur limite de saturation (SGW), les valeurs du capteur supérieures à la valeur limite de saturation (SGW) sont affectées à une première zone (A) et les valeurs du capteur inférieures à la valeur limite de saturation (SGW) sont affectées à une deuxième zone (B), la première valeur du capteur supérieure à la valeur limite de saturation (SGW) étant définie comme valeur de démarrage (MARCHE) et la dernière valeur du capteur supérieure à la valeur limite de saturation (SGW) étant définie comme valeur d'arrêt (ARRÊT) dans la première zone (A), le maximum de la deuxième dérivation (dp2) du signal du capteur étant défini comme valeur de démarrage (MARCHE) et le minimum de la deuxième dérivation (dp2) du signal du capteur étant défini comme valeur d'arrêt (ARRÊT) dans la deuxième zone (B), une largeur de plateau (PB) étant déterminée à partir du nombre (k) d'étapes d'analyse entre la valeur de démarrage (MARCHE) et la valeur d'arrêt (ARRÊT) et la largeur de plateau (PB) étant définie comme étant déterminante pour la recevabilité ou l'irrecevabilité des valeurs du capteur, l'irrecevabilité des valeurs du capteur étant constatée dans le cas d'une largeur de plateau (PB) supérieure à une valeur limite (PBGW) et le capteur de pression de cylindre (11) étant marqué comme défectueux.

2. Procédé selon la revendication 1, **caractérisé en ce que** la largeur de plateau (PB) est calculée en multipliant le nombre (k) d'étapes d'analyse par la résolution de signal selon un angle de vilebrequin ou un temps d'analyse.

3. Procédé selon la revendication 2, **caractérisé en ce que** seulement les valeurs du capteur situées dans une zone d'évaluation (AW) sont prises en ligne de compte dans la détermination de la largeur du plateau (PB).

4. Procédé selon la revendication 3, **caractérisé en ce qu'**une phase consécutive est initiée tandis que la valeur du capteur est définie sur une valeur de remplacement, un fonctionnement à puissance réduite du moteur à combustion interne (1) est prédéterminé, la valeur du capteur est définie sur la valeur d'un capteur de pression de cylindre (11) sain ou bien un arrêt du moteur est émis.
